# FASCICULE DE BREVET EUROPEEN

(11) **EP 0 435 712 B1**
(45) Date de publication et mention de la délivrance du brevet: **29.09.1993**
(21) Numéro de dépôt: 90403385.9
(22) Date de dépôt: 29.11.1990
(51) Int. Cl.: F16B 7/22, F16L 37/24

(54) **Système pour l'assemblage coaxial de deux pièces de révolution**
System für den koaxialen Zusammenbau zweier rotierender Teile
System for the coaxial assembly of two revolution pieces

(30) Priorité: 27.12.1989 FR 8917266
(43) Date de publication de la demande: 03.07.1991
(73) Titulaire: AEROSPATIALE Société Nationale Industrielle, 75781 Paris Cédex 16 (FR)
(72) Inventeur: Demange, Claude, F-78300 Poissy (FR)
(74) Mandataire: Bonnetat, Christian

(56) Documents cités:
- DE-A- 3 607 231
- GB-A- 1 014 120
- GB-A- 2 012 619
- US-A- 1 415 157

## Description

La présente invention concerne un système pour I'assemblage de deux pièces de révolution.

Pour assurer une liaison fiable entre deux pièces de révolution, on utilise généralement une pluralité de boulons ou de vis régulièrement répartis autour desdites pièces. Il en résulte que le montage, et dans une moindre mesure le démontage, impliquent un temps d'intervention important, notamment lorsque les pièces à assembler présentent une grande circonférence entraînant l'emploi d'un nombre élevé de boulons.

En effet, outre les diverses manipulations fastidieuses de mise en place desdits boulons, il est souhaitable, pour obtenir un couple de serrage identique sur chaque boulon, d'utiliser une clé dynamométrique qui doit être étalonnée périodiquement. Par ailleurs, lorsque les pièces à assembler sont destinées aux domaines aéronautique et spatial comme, par exemple, l'assemblage de sous-ensembles structuraux de lanceurs (coiffe-case à équipements), un contrôle du serrage doit être effectué au moyen d'appareils appropriés, tels que ceux à ultrasons.

On constate donc que, si ce type de système d'assemblage par boulons donne satisfaction quant à l'immobilisation des deux pièces, il présente néanmoins l'inconvénient d'impliquer un temps d'intervention important pour les raisons évoquées préalablement.

Pour réduire le temps de montage des pièces, il est connu, par ailleurs, d'utiliser un système d'assemblage dont la liaison entre les deux pièces à assembler s'effectue par emboîtement, au moyen d'organes radiaux ménagés en saillie sur l'une des pièces, qui coopèrent avec des logements de réception ménagés sur l'autre pièce. Bien que ce type d'assemblage soit d'une mise en oeuvre rapide, l'immobilisation des deux pièces l'une par rapport à l'autre s'avère peu fiable à cause des jeux fonctionnels axial et radial apparaissant entre les organes et les logements de réception. Par conséquent, ce système d'assemblage ne convient que lorsque les pièces assemblées ne sont pas ou peu soumises, par la suite, à des sollicitations mécaniques.

Pour éliminer le jeu fonctionel radial, le document DE-A-3 607 231 prévoit des moyens de liaison par coincement coopérants, prévus respectivement sur lesdits organes radiaux et lesdits logements de réception de façon à centrer lesdites pièces coaxialement l'une par rapport à l'autre et à les maintenir radialement en position.

Pour tirer profit de la rapidité de montage et de démontage offerte par ce type de système d'assemblage par emboîtement, le système d'assemblage, objet de la présente invention, a pour but, de par sa conception, de garantir une immobilisation totale desdites pièces, lorsqu'elles sont assemblées, en supprimant totalement aussi bien le jeu fonctionel axial que le jeu fonctionel radial.

A cet effet, selon l'invention, le système comprenant deux pièces de révolution devant être assemblées, pièces dont la première comporte des organes radiaux en saillie et dont la seconde présente des logements destinés à la réception des organes radiaux de ladite première pièce, ledit système comprenant des moyens de liaison par coincement prévus respectivement sur lesdits organes radiaux et lesdits logements de réception de façon à centrer lesdits pièces coaxialement l'une par rapport à l'autre et à les maintenir radialement en position, est caractérisé en ce qu'il comporte de plus des moyens élastiquement déformables associés à l'une desdites pièces et susceptibles de presser axialement lesdits moyens de liaison par coincement desdits organes radiaux contre ceux desdits logements de réception.

Ainsi, l'immobilisation des deux pièces est parfaite, puisque le jeu fonctionnel radial est éliminé grâce auxdits moyens de liaison par coincement, tandis que le jeu fonctionnel axial est supprimé par lesdits moyens élastiquement déformables. On réalise de la sorte un verouillage particulièrement efficace et fiable des deux pièces et ce, dans un temps de montage rapide.

Dans un mode préféré de réalisation, lesdits moyens de liaison par coincement sont du type à liaison conique et comprennent une portée conique ménagée sur ladite première pièce de révolution et coaxiale à son axe longitudinal, et, une portée conique complémentaire ménagée sur ladite seconde pièce de révolution et coaxiale à son axe longitudinal.

On remarque donc que la coopération des surfaces coniques implique automatiquement une disposition coaxiale des deux pièces de révolution et la suppression de tout jeu radial entre celles-ci.

Ladite portée conique, ménagée sur la première pièce, peut être avantageusement définie par l'ensemble des faces avant, en regard de la seconde pièce, desdits organes radiaux. Quant à ladite portée conique, ménagée sur la seconde pièce, elle est de préférence définie par la face arrière desdits logements dans lesquels sont susceptibles de s'engager lesdits organes radiaux.

Par ailleurs, ces organes radiaux peuvent être disposés dans un même plan diamétral en étant régulièrement répartis angulairement les uns par rapport aux autres, et, lesdits logements de la seconde pièce peuvent être formés par une gorge annulaire, dont le rebord, défini entre ladite gorge et l'une des faces d'extrémité de la seconde pièce en regard de la première pièce, est alternativement pourvu d'encoches et de dents régulièrement réparties les unes par rapport aux autres.

L'assemblage des deux pièces est obtenu, dans un premier temps, en introduisant les organes radiaux dans les encoches du rebord jusqu'à ce que leurs faces avant coniques coopèrent avec la face arrière conique de la gorge, puis, dans un second temps, en imprimant un mouvement de rotation relatif à la première pièce jusqu'à ce que ses organes radiaux se trouvent en coïncidence sous les dents dudit rebord.

De préférence, lesdits organes radiaux font saillie de la surface interne d'une paroi cylindrique de ladite première pièce, tandis que lesdits logements de réception sont ménagés dans la surface externe d'une paroi cylindrique de ladite seconde pièce.

Dans un premier mode de réalisation, lesdits moyens élastiquement déformables sont agencés sur ladite première pièce de révolution et ils comprennent une lame élastiquement déformable prolongeant latéralement chaque organe radial et orientée de façon inclinée par rapport audit organe, en suivant la courbure de ladite pièce de révolution, pour que la hauteur de chaque ensemble constitué d'un organe radial et d'une lame élastiquement déformable soit supérieure à celle desdits logements de réception.

Ainsi, ces lames jouent le rôle de poutres déformables encastrées respectivement auxdits organes et dont l'extrémité libre de chacune d'elles, lorsque les ensembles d'organes radiaux et de lames s'engagent dans les logements de réception, par une rotation relative des deux pièces, fléchit élastiquement de façon à exercer un effort axial immobilisant les organes radiaux dans les logements.

Par ailleurs, lesdites lames sont avantageusement orientées du côté opposé aux faces avant desdits organes radiaux, qui définissent ladite portée conique de la première pièce de révolution. L'engagement des organes radiaux et des lames s'effectue alors progressivement dans la gorge de réception. Aussi, dans un plan perpendiculaire à ladite première pièce de révolution, la longueur de l'arc de chaque ensemble organe radial-lame élastique est proche de celle desdites encoches ménagées sur le rebord de la seconde pièce de révolution.

On comprend donc que, grâce à l'agencement de lames élastiques prolongeant les organes radiaux et à la réalisation d'une portée conique sur les faces avant de ceux-ci, coopérant avec une portée conique complémentaire ménagée dans les logements de réception, on réalise une immobilisation totale des deux pièces, en supprimant les jeux radial et axial.

Dans un second mode de réalisation, lesdits moyens élastiques déformables sont agencés sur ladite seconde pièce de révolution et ils peuvent comprendre, dans ce cas, une pluralité de pistons déplaçables axialement, répartis autour de ladite seconde pièce et agencés en regard desdits logements de réception, de façon que, après la mise en place des organes radiaux dans lesdits logements, les pistons agissent respectivement contre les organes en les immobilisant axialement.

On réalise là encore une immobilisation axiale fiable et efficace des organes radiaux sous les dents du rebord de la seconde pièce, en supprimant le jeu axial entre les deux pièces grâce auxdits pistons.

De préférence, chaque piston est logé de façon coulissante dans un perçage ménagé dans les dents du rebord de ladite seconde pièce, chacun desdits pistons étant soumis à l'action d'un ressort de compression prévu entre ledit piston et un capot rapporté à la face d'extrémité dudit rebord.

Avantageusement, la face de chaque piston, destinée à presser ledit organe radial correspondant dans ladite gorge annulaire, est biseautée. De la sorte, on obtient un serrage progressif des organes radiaux dans la gorge annulaire, sous l'action desdits ressort.

Les figures du dessin annexé feront bien comprendre comment l'invention peut être réalisée. Sur ces figures, des références identiques désignent des éléments semblables.

La figure 1 est une vue partielle en perspective de deux pièces de révolution destinées à être assemblées l'une à l'autre par l'intermédiaire du système d'assemblage selon l'invention les équipant.

La figure 2 est une vue en bout de la première pièce de révolution montrant les organes radiaux dudit système d'assemblage, auxquels sont associés dans ce cas lesdits moyens élastiquement déformables.

La figure 3 est une vue en coupe de la première pièce selon la ligne III-III de la figure 2.

La figure 4 est une vue en bout de la seconde pièce de révolution montrant les logements de réception dudit système d'assemblage, dans lesquels sont susceptibles de s'engager lesdits organes radiaux.

La figure 5 est une vue en coupe de la seconde pièce selon la ligne V-V de la figure 4.

La figure 6 représente une vue en perspective agrandie d'un des organes radiaux faisant saillie de la première pièce et auquel est associée la lame élastiquement déformable.

La figure 7 montre une vue en coupe agrandie partielle des logements de réception conformés en une gorge annulaire.

Les figures 8A,8B et 8C illustrent en développée les différentes étapes successives pour immobiliser les deux pièces l'une à l'autre au moyen du système d'assemblage selon l'invention.

La figure 8D est une coupe selon la ligne VIII-VIII de la figure 8C montrant la liaison conique entre les deux pièces de révolution.

La figure 9 est une vue en bout d'une variante de réalisation de la première pièce de révolution pourvue desdits organes radiaux.

La figure 10 est une coupe de la première pièce selon la ligne X-X de la figure 9.

La figure 11 montre une vue en bout d'une variante de réalisation de la seconde pièce à laquelle sont associés, dans ce cas, lesdits moyens élastiquement déformables et qui est destinée à être assemblée à la première pièce illustrée sur les figures 9 et 10.

La figure 12 représente une coupe agrandie desdits moyens selon la ligne XII-XII de la figure 11.

La figure 13 est une vue analogue à la figure 12 montrant l'immobilisation des deux pièces lorsque les organes radiaux sont engagés dans la gorge annulaire.

La figure 14 montre une coupe de la figure 13 selon la ligne XIV-XIV.

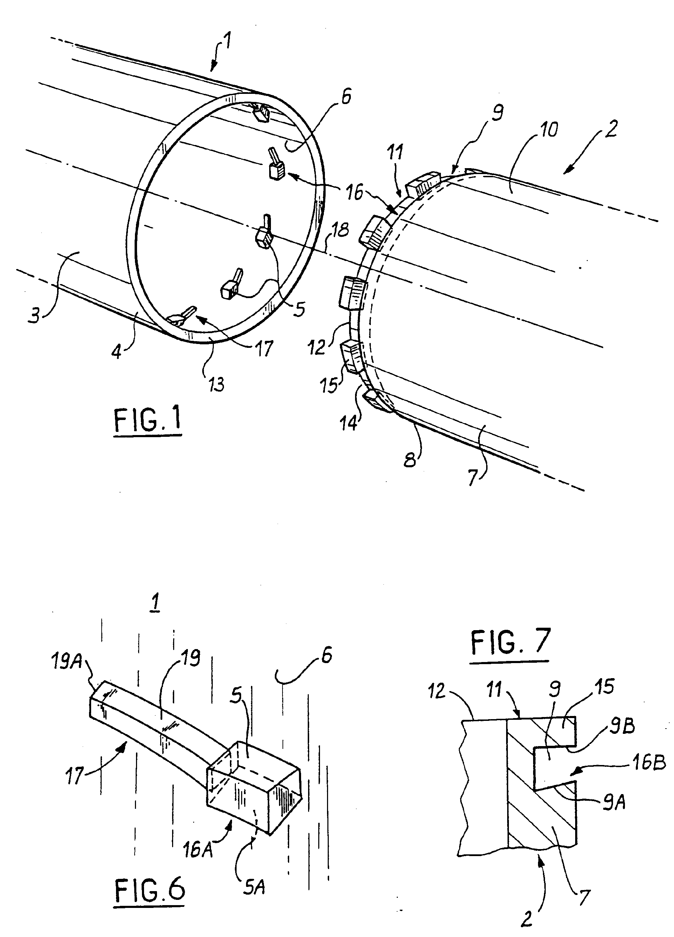

En se référant à la figure 1, les première et seconde pièces de révolution 1 et 2, partiellement représentées, sont destinées à être immobilisées l'une par rapport à l'autre grâce au système d'assemblage de l'invention.

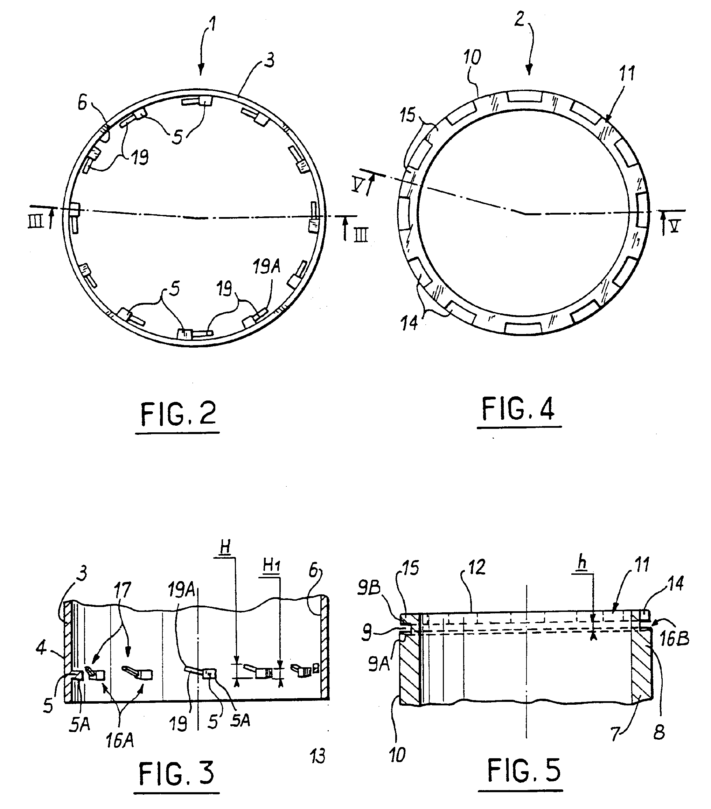

Sur les figures 1, 2 et 3, la surface interne 6 de la paroi cylindrique 3 de la première pièce 1 présente, au voisinage de son extrémité 4, des organes radiaux 5 faisant saillie de ladite surface cylindrique interne 6. Ces organes radiaux 5 sont disposés dans un même plan diamétral de la pièce 1 et sont agencés de façon régulièrement répartie les uns par rapport aux autres. Sur les figures 1, 4 et 5, la surface externe 10 de la paroi cylindrique 7 de la seconde pièce 2 présente, au voisinage de son extrémité 8, une gorge annulaire 9 ménagée dans ladite surface cylindrique externe 10 et qui est destinée à faire office de logement de réception desdits organes radiaux 5. Par ailleurs, le rebord d'extrémité 11, délimité entre la gorge annulaire 9 et la face d' extrémité 12 de la seconde pièce 2, est alternativement pourvu d'encoches 14 et de dents 15 régulièrement répartis, en formant ainsi, comme le montrent plus particulièrement les figures 1 et 4, un rebord 11 crénelé. En outre, le diamètre de la surface cylindrique interne 6 de la pièce 1 correspond sensiblement au diamètre de la surface cylindrique externe 10 de la pièce 2.

Le système d'assemblage des deux pièces 1 et 2 s'effectue par l'introduction des organes radiaux 5 de la pièce 1, traversant les encoches 14 du rebord 11, dans la gorge 9, puis par la rotation de la pièce 1 par rapport à la pièce 2 de façon que les organes radiaux 5 se trouvent sous les dents 15 du rebord 11.

Pour que les deux pièces ainsi emboîtées soient immobilisées aussi bien radialement qu'axialement, le système d'assemblage selon l'invention comprend de plus, d'une part, des moyens de liaison par coincement 16 prévus sur les pièces 1 et 2 pour les centrer coaxialement l'une par rapport à l'autre et les maintenir radialement en position et, d'autre part, des moyens élastiquement déformables 17 associés à l'une des pièces et susceptibles de presser axialement lesdits organes radiaux de la première pièce dans la gorge de réception de la seconde pièce. Ces moyens 16 et 17 permettent de supprimer les jeux fonctionnels et de garantir ainsi une immobilisation efficace et fiable des pièces assemblées.

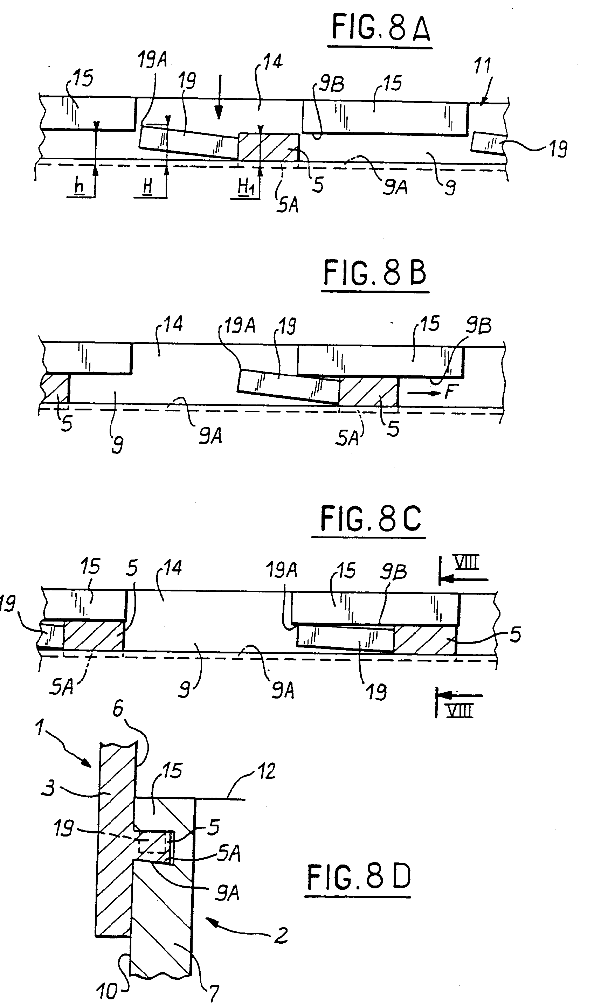

Pour cela, les moyens de liaison par coincement 16 sont avantageusement du type à liaison conique. Ils comprennent alors deux portées coniques complémentaires 16A et 16B prévues respectivement sur les première et seconde pièces 1 et 2. Dans le mode de réalisation illustré, la portée conique 16A, coaxiale à l'axe longitudinal de la pièce 1 et convergeant en direction de la face avant 13 de celle-ci, est définie par l'ensemble des faces avant 5A des organes radiaux, disposés en vis-à-vis de la seconde pièce. Quant à la portée conique 16B, complémentaire de la portée 16A et coaxiale à l'axe longitudinal de la pièce 2, elle est avantageusement constituée par la face arrière 9A de la gorge annulaire 9, comme le montrent notamment les figures 5 et 7.

On comprend donc que, lorsque les organes radiaux 5, traversant les encoches 14 du rebord 11, viennent au contact, par leurs faces avant 5A, de la face arrière 9A de ladite gorge 9, les deux pièces 1 et 2 sont rigoureusement centrées coaxialement l'une par rapport à l'autre le long de l'axe longitudinal 18 formé par les deux pièces assemblées, tout en supprimant la liberté radiale des pièces l'une par rapport à l'autre. De la sorte, les pièces 1 et 2 sont immobilisées radialement en position.

Dans le mode de réalisation illustré sur les figures 1,2,3 et 6, les moyens élastiquement déformables 17 sont agencés sur la première pièce de révolution 1 et ils comprennent une lame élastiquement déformable 19 associés à chaque organe radial 5. Sur ces figures, chaque lame 19 prolonge latéralement l'organe radial correspondant 5 et elle est orientée de façon inclinée par rapport audit organe radial, en suivant parallèlement la courbure de la surface interne 6 de la paroi 3 de ladite pièce 1. L'orientation des lames arquées 19 est dirigée du côté opposé aux faces avant 5A des organes radiaux 5, qui définissent la portée conique 16A.

Ainsi, sur les figures 3,5 et 8A, la hauteur "H" de chaque ensemble, constitué d'un organe radial et d'une lame élastiquement déformable, et comprise entre l'arête d' extrémité libre 19A de la lame et la face avant inclinée 5A de l'organe, est supérieure à la hauteur "h" de la gorge annulaire 9, comprise entre sa face arrière inclinée 9A et sa face avant 9B correspondant aux dents 15 du rebord 11. Par ailleurs, la hauteur "H1" des organes radiaux 5 est sensiblement analogue, au jeu fonctionnel de montage près, à la hauteur "h" de la gorge 9. Dans la réalisation illustrée, la longueur de l'arc de chaque ensemble organe radial 5-lame élastique 19 est bien entendu légèrement inférieure à la longueur de l'arc des encoches 14. Ces lames élastiquement déformables 19, dont la section est de préférence rectangulaire, permettent l'immobilisation axiale des organes radiaux 5 dans la gorge 9, comme l'illustrent les figures 8A,8B et 8C.

Sur la figure 8A, on voit que les ensembles organes radiaux 5-lames élastiques 19 ont traversé les encoches 14 du rebord 11 pour venir en appui, par les faces avant inclinées 5A des organes 5, contre la face arrière 9A de la gorge annulaire 9. Ainsi, cette liaison conique assure un auto-centrage des deux pièces en supprimant de plus les jeux radiaux.

Puis, figure 8B, on imprime par exemple à la pièce 1 un mouvement de rotation angulairement limité montré par la flèche F, de façon que les organes radiaux 5 et les lames élastiques 19 les prolongeant s'engagent progressivement sous les faces 9B des dents 15. A ce moment, les lames élastiquement déformables 19, entrant au contact des faces 9B des dents 15, fléchissent alors naturellement jusqu'à ce que leurs arêtes 19A soient au contact des dents, comme le montre la figure 8C. On comprend donc que les arêtes 19A des lames élastiques 19 alors fléchies exercent chacune un effort axial contre les faces 9B des dents et pressent ainsi les organes radiaux 5 contre la face arrière 9A de la gorge. On réalise par conséquent une immobilisation axiale particulièrement efficace des deux pièces 1 et 2 assemblées avec suppression du jeu axial, ce qui, ajouté à la liaison conique immobilisant radialement les deux pièces, constitue un verrouillage total des pièces 1 et 2.

Par ailleurs, on remarque que le desserrage des organes radiaux dans le sens opposé au sens de montage F, est impossible puisque les arêtes d'extrémité 19A ont tendance à pénétrer dans les faces des dents dudit rebord.

Bien qu'ils ne soient pas représentés sur ces figures, des moyens de butée sont prévus sur les pièces 1 et 2 permettant de limiter angulairement la rotation des pièces, de façon que chaque ensemble organe radial-lame élastique, après que l'assemblage est réalisé, viennent exactement en dessous des dents. Des repères peuvent, par ailleurs, être prévus sur les surfaces externes des pièces pour indiquer la position de verrouillage, lorsqu'ils sont, par exemple, en regard l'un de l'autre.

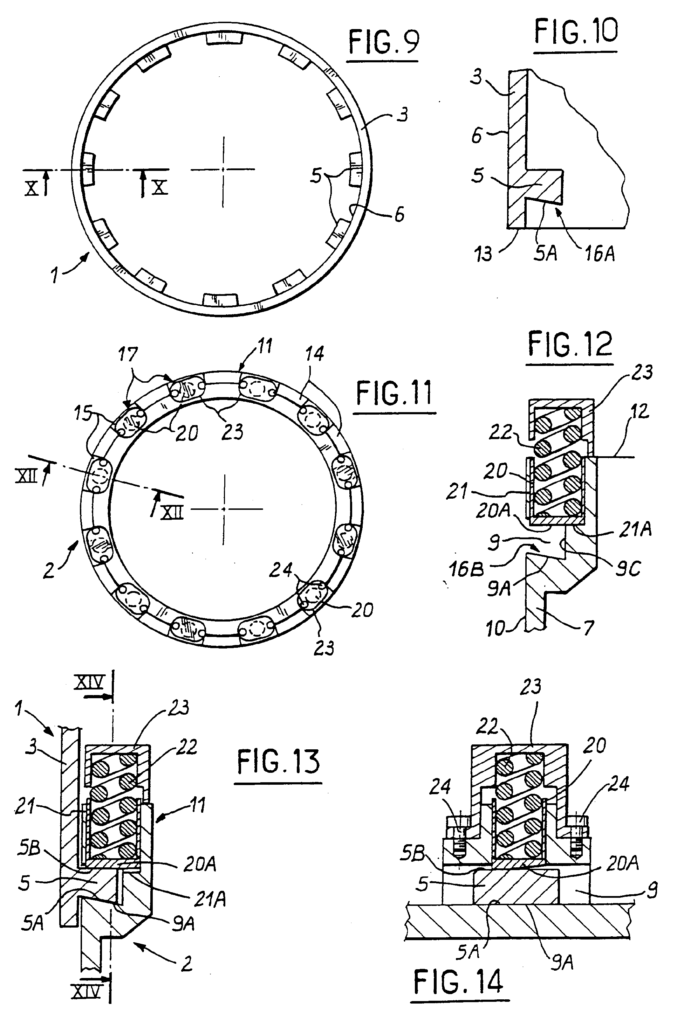

Dans un autre mode de réalisation représenté sur les figures 9 à 14, les moyens élastiquement déformables 17 peuvent être agencés sur la seconde pièce de révolution 2. Dans ce cas, ces moyens 17, représentés sur les figures 11 et 12, comprennent une pluralité de pistons 20 déplaçables axialement répartis autour de la face d'extrémité 12 du rebord 11 en correspondance des dents 15. Ces pistons 20 sont logés de façon coulissante dans des perçages 21 ménagés respectivement dans les dents 15 du rebord 11, chaque piston étant soumis à l'action d'un ressort 22 qui est disposé entre le piston 20 et un capot 23 rapporté sur la face d'extrémité 12 du rebord 11 au moyen de vis 24.

On voit, sur la figure 12, que chaque piston 20 vient en butée par sa face 20A contre la partie de fond 21A du perçage 20, laquelle débouche perpendiculairement au fond 9C de la gorge annulaire 9. La face arrière 9A de la gorge est identique au précédent mode de réalisation et définit la portée conique 16B.

Quant aux organes radiaux 5 faisant saillie de la surface cylindrique interne 6 de la paroi 3 de ladite première pièce, leur face avant définit de la même façon que précédemment la portée conique 16A, tandis qu'ils sont dépourvus des lames élastiques (figures 9 et 10).

La mise en place des organes radiaux 5 de la première pièce 1 dans la gorge annulaire 9 de la seconde pièce s'effectue de façon identique que précédemment, la liaison conique centrant coaxialement les deux pièces et supprimant les jeux radiaux. En revanche, l'immobilisation axiale des pièces est obtenue, comme le montrent les figures 13 et 14, par l'action des pistons axiaux 20, poussés vers la gorge 9 par leurs ressorts respectifs, contre les faces arrière 5B des organes radiaux 5. Ces derniers sont ainsi pressés par leurs faces avant 5A contre la face arrière inclinée 9A de la gorge 9. Dans cette position, les faces 20A des pistons ne sont plus au contact de la partie de fond 21 dudit rebord 11. On remarque, par ailleurs, que la face 20A de chaque piston 20 est biseautée, de sorte que le serrage des organes radiaux 5 s'effectue progressivement et efficacement contre la face 9A de la gorge 9.

Là aussi, des moyens de butée non représentés sont prévus sur les pièces 1 et 2 de façon que, lors de l'assemblage, les organes radiaux soient coincés par les pistons contre la face arrière de la gorge.

## Revendications

1. Système comprenant deux pièces de révolution devant être assemblées, pièces dont la première (1) comporte des organes radiaux (5) en saillie et dont la second (2) présente des logements (9) destinés à la réception des organes radiaux de ladite première pièce, ledit système comprenant des moyens de liaison par coincement (16) coopérants, prévus respectivement sur lesdits organes radiaux et lesdits logements de réception de façon à centrer lesdites pièces coaxialement l'une par rapport à l'autre et à les maintenir radialement en position,
caractérisé en ce qu'il comporte de plus des moyens élatiquement déformables (17) associés à l'une desdites pièces et susceptibles de presser axialement lesdits moyens de liaison par coincement desdits organes radiaux contre ceux desdits logements de réception (9).

2. Système selon la revendication 1,
caractérisé en ce que lesdits moyens de liaison par coincement (16) sont du type à liaison conique et comprennent une portée conique (16A) ménagée sur ladite première pièce de révolution (1) et coaxiale à son axe longitidunal, et une portée conique complémentaire (16B) ménagée sur ladite seconde pièce de révolution (2) et coaxiale à son axe longitudinal.

3. Système selon la revendication 2,
caractérisé en ce que ladite portée conique (16A), ménagée sur la première pièce, est définie par l'ensemble des faces avant (5A), en regard de la seconde pièce, lesdits organes radiaux (5).

4. Système selon la revendication 2,
caractérisé en ce que ladite portée conique (16B), ménagée sur la seconde pièce, est définie par la face arrière (9A) desdits logements (9) dans lesquels sont susceptibles de s'engager lesdits organes radiaux (5).

5. Système selon l'une des revendications 1 à 4,
caractérisé en ce que lesdits organes radiaux (5) de la première pièce (1) sont disposés dans un même plan diamétral en étant régulièrement répartis angulairement les uns par rapport aux autres et en ce que lesdits logements de la seconde pièce (2) sont formés par une gorge annulaire (9), dont le rebord (11), défini entre ladite gorge (9) et l'une (12) des faces d' extrémité de la seconde pièce en regard de la première pièce, est alternativement pourvu d'encoches (14) et de dents (15) régulièrement réparties les unes par rapport aux autres.

6. Système selon l'une des revendications 1 à 5,
caractérisé en ce que lesdits organes radiaux (5) font saillie de la surface interne (6) d'une paroi cylindrique (3) de ladite première pièce (1), tandis que lesdits logements de réception (9) sont ménagés dans la surface externe (8) d'une paroi cylindrique (7) de ladite seconde pièce (2).

7. Système selon l'une quelconque des revendications précédentes 1 à 6,
caractérisé en ce que lesdits moyens élastiquement déformables (17) sont agencés sur ladite première pièce de révolution (1) et en ce qu'ils comprennent une lame élastiquement déformable (19) prolongeant latéralement chaque organe radial (5) et orientée de façon inclinée par rapport audit organe, en suivant la courbure de ladite pièce de révolution, pour que la hauteur "H" de chaque ensemble constitué d'un organe radial (5) et d'une lame élastiquement déformable (19) soit supérieure à celle "h" desdits logements de réception (9).

8. Système selon la revendication 7,
caractérisé en ce que lesdites lames (19) sont orientées du côté opposé aux faces avant (5A) des organes, qui définissent ladite portée conique (6A) de la première pièce de révolution (1).

9. Système selon l'une des revendications 7 ou 8,
caractérisé en ce que, dans un plan perpendiculaire à ladite première pièce de révolution, la longueur de l'arc de chaque ensemble organe radial (5)-lame élastique (19), est proche de celle desdites encoches (14) ménagées sur le rebord (11) de la seconde pièce de révolution.

10. Système selon l'une quelconque des revendications précédentes 1 à 6,
caractérisé en ce que lesdits moyens élastiques déformables (17) sont agencés sur ladite seconde pièce de révolution (2) et en ce qu'ils comprennent une pluralité de pistons (20) déplaçables axialement, répartis autour de ladite seconde pièce et agencés en regard desdits logements de réception (9), de façon que, après la mise en place des organes radiaux dans lesdits logements, les pistons (20) agissent respectivement contre les organes (5) en les immobilisant axialement.

11. Système selon la revendication 10,
caractérisé en ce que chaque piston (20) est logé, de façon coulissante, dans un perçage (21) ménagé dans les dents (15) du rebord (11) de ladite seconde pièce (2), chacun desdits pistons étant soumis à l'action d'un ressort de compression (22) prévu entre ledit piston (20) et un capot (23) rapporté à la face d' extrémité (12) dudit rebord (11).

12. Système selon l'une des revendications 10 ou 11,
caractérisé en ce que la face (20A) de chaque piston (20), destinée à presser ledit organe radial correspondant dans ladite gorge annulaire (9), est biseautée.

13. Système selon l'une quelconque des revendications précédentes 1 à 12,
caractérisé en ce que des moyens de butée sont disposés sur lesdites pièces de révolution, permettant de limiter la rotation relative des deux pièces.

## Patentansprüche

1. System das zwei Rotationsteile enthält, die zusammengefügt werden sollen, wovon das erste (1) vorspringende Radialelemente(5) das zweite (2) Räume (9), die zur Aufnahme der Radialelemente des besagten ersten Teils dienen, aufweist, wobei das besagte System zusammenwirkende Verbindungsmittel durch Klemmung (16) enthält, die jeweils auf den besagten Radialelementen und den besagten Aufnahmeräumen vorgesehen sind, um die besagten Teile koaxial zu einander zu zentrieren und sie radial in Stellung zu halten,
dadurch gekennzeichnet, daß sie außerdem elastisch verformbare Mittel (17) enthalten, die mit einem der besagten Teile verbunden sind und die besagten Verbindungsmittel durch Klemmung der besagten Radialelemente gegen die der besagten Aufnahmeräume (9) drücken.

2. System nach dem Anspruch 1,
dadurch gekennzeichnet, daß die besagten Verbindungsmittel durch Klemmung (16) der Art einer konischen Verbindung sind und eine konische Tragfläche (16A), die auf dem besagten ersten Rotationsteil (1) und koaxial zu ihrer Längsachse angeordnet ist, und eine ergänzende Tragfläche (16B), die auf dem zweiten Rotationsteil (2) und koaxial ihrer Längsfläche angeordnet ist, enthalten.

3. System nach dem Anspruch 2,
dadurch gekennzeichnet, daß die besagte konische Tragfläche (16A), die auf dem ersten Teil angeordnet ist, durch die Gesamtheit der Vorderflächen (5A) der besagten Radialelemente (5), die gegenüber des zweiten Teils liegen, bestimmt wird.

4. System nach dem Anspruch 2,
dadurch gekennzeichnet, daß die auf dem zweiten Teil angeordnete konische Tragfläche (16B) durch die hintere Fläche (9A) der besagten Räume (9) in welche die besagten Radialelemente (5) eingreifen können bestimmt ist.

5. System nach dem Anspruch 1 bis 4,
dadurch gekennzeichnet, daß die besagten Radialelemente (5) des ersten Teils (1) in einer gleichen diametralen Ebene angeordnet sind, wobei sie reglemäßig in einem Winkel gegeneinander verteilt sind, und daß die besagten Räume des zweiten Teils (2) durch eine ringförmige Kehle (9), dessen Rand (11), der durch die besagte Kehle (9) und eine (12) der Endflächen des zweiten Teils, die dem ersten Teil gegenüber liegt, bestimmt ist, wechselweise mit Kerben (14) und Zähnen (15) bestückt ist, die gleichmäßig unter sich verteilt sind, gebildet sind.

6. System nach dem Anspruch 1 bis 5,
dadurch gekennzeichnet, daß die besagten Radialelemente (5) aus der inneren Fläche (6) einer zylindrischen Wandung (3) des besagten Teils (1) einen Vorsprung bilden, während die besagten Aufnahmeräume (9) in der äußeren Fläche (8) einer zylindrischen (7) des besagten Teils (2) angeordnet sind.

7. System nach irgend einem der vorhergehenden Ansprüche 1 bis 6,
dadurch gekennzeichnet, daß die besagten elastisch verformbaren Mittel (17) auf dem besagten ersten Rotationsteil (1) angeordnet sind und daß sie eine elastisch verformbare Zunge (19) enthalten, welche jedes Radialelement (5) seitlich verlängert und gegenüber dem besagten Element geneigt ist, indem sie die Biegung des besagten Rotationsteils folgt, damit die Höhe "H" der Einheit, welche durch ein Radialelement (5) und einer elastisch verformbaren Zunge (19) gebildet wird, größer ist als die Höhe "h" der besagten Aufnahmeräume (9).

8. System nach dem Anspruch 7,
dadurch gekennzeichnet, daß die besagten Zungen (19) nach der den Vorderflächen (5A) der Elemente, welche die besagte konische Tragfläche (6A) des ersten Rotationsteils (1) bilden, gegenüberliegenden Seite gerichtet sind.

9. System nach dem Anspruch 7 oder 8,
dadurch gekennzeichnet, daß in einer zum besagten ersten Rotationsteil senkrechten Ebene, die Bogenlänge jeder Einheit Radialelemente (5)-elastische Zunge (19) fast gleich der der besagten auf dem Rand (11) des zweiten Rotationsteils angebrachten Kerben (14) ist.

10. System nach irgend einem der vorhergehenden Ansprüche 1 bis 6,
dadurch gekennzeichnet, daß die besagten elastisch verformbaren Mittel (17) auf dem besagten zweiten Rotationsteil (2) angeordnet sind und daß sie eine Vielzahl von axial beweglichen Kolben (20), die um das besagte zweite Teil verteilt und gegenüber der besagten Aufnahmeräume (9) angeordnet sind, enthalten, so daß nach dem Einbringen der Radialemente in die besagten Räume die Kolben (20) jeweils gegen die Elemente (5) wirken und sie axial festsetzen.

11. System nach dem Anspruch 10,
dadurch gekennzeichnet, daß jeder Kolben (20) gleitbar in einer in dem Zähnen (15) des Randes (11) des besagten zweiten Teils (2) angebrachten Bohrung (21) gelagert ist, wobei jeder des besagten Kolben der Wirkung einer Druckfeder (22) unterliegt, die zwischen dem besagten Kolben (20) und einer an der Endfläche (12) des besagten Randes (11) angebrachten Haube (23) vorgesehen ist.

12. System nach einem der Anspruch 10 oder 11, dadurch gekennzeichnet, daß die Fläche (20A) jedes Kolbens (20); die zum Eindrücken des entsprechenden besagten Radialelementes in die besagte ringförmige Kehle (9) bestimmt ist, abgeschrägt ist.

13. System nach irgend einem der vorhergehenden Ansprüche 1 bis 12,
dadurch gekennzeichnet, daß Anschlagmittel auf den besagten Rotationsteilen angeordnet sind, welche die jeweilige Drehung der beiden Teile begrenzen.

## Claims

1. System comprising two parts of revolution which are to be joined, the first (1) of which parts includes projecting radial members (5) and the second (2) of which has housing (9) intended for receiving the radial members of the said first part, the said system comprising interacting wedging-linkage means (16) provided respectively on the said radial members and the said reception housings so as to align the said parts coaxially with respect to each other and to hold them in position radially, characterised in that it additionally includes elastically deformable means (17) which are associated with one of the said parts and are capable of axially pressing the said wedging-linkage means of the said radial members against those of the said reception housings (9).

2. System according to claim 1, characterised in that the said wedging-linkage means (16) are of the type having a tapered linkage and comprise a tapered bearing surface (16A) made on the said first part of revolution (1) and coaxial with its longitudinal axis, and a complementary tapered bearing surface (16B) made on the said second part of revolution (2) and coaxial with its longitudinal axis.

3. System according to claim 2, characterised in that the said tapered bearing surface (16A), made on the first part, is defined by the set of front faces (5A), facing the second part, of the said radical members (5).

4. System according to claim 2, characterised in that the said tapered bearing surface (16B), made on the second part, is defined by the rear face (9A) of the said housing (9) in which the said radial members (5) are capable of being engaged.

5. System according to one of claims 1 to 4, characterised in that the said radial members (5) of the first part (1) are arranged in one and the same diametral plane while being uniformly distributed angularly with respect to each other and in that the said housings of the second part (2) are formed by an annular groove (9), the rim (11) of which, defined between the said groove (9) and that one (12) of the end faces of the second part facing the first part, is alternately provided with notches (14) and with teeth (15) uniformly distributed with respect to each other.

6. System according to one of claims 1 to 5, characterised in that said radial members (5) project from the inner surface (6) of a cylindrical wall (3) of the said first part (1), whereas the said reception housings (9) are made in the outer surface (8) of a cylindrical wall (7) of the said second part (2).

7. System according to any one of the preceding Claims 1 to 6, characterised in that the said elastically deformable means (17) are arranged on the said first part of revolution (1) and in that they comprise an elastically deformable strip (19) prolonging each radial member (5) laterally and oriented so as to be inclined with respect to the said member, while following the curvature of the said part of revolution, so that the height "H" of each set consisting of one radial member (5) and one elastically deformable strip (19), is greater than that "h" of the said reception housings (9).

8. System according to claim 7, characterised in that the said strips (19) are oriented on the side opposite the front faces (5A) of the members, which define the said tapered bearing surface (6A) of the first part of revolution (1).

9. System according to one of claims 7 and 8, characterised in that, in a plane perpendicular to the said first part of revolution, the length of the arc of each radial member (5)-elastic strip (19) set is close to that of the said notches (14) made on the rim (11) of the second part of revolution.

10. System according to any one of the preceding Claims 1 to 6, characterised in that the said deformable elastic means (17) are provided on the said second part of revolution (2) and in that they comprise a plurality of piston (20) which can move axially and are distributed around the said second part and arranged facing the said reception housings (9) so that, after the radial members have been installed in the said housings, the pistons (20) act respectively against the members (5), by locking them axially.

11. System according to Claim 10, characterised in that each piston (20) is housed, in a sliding manner, in a bore (21) made in the teeth (15) of the rim (11) of the said second part (2), each of the said pistons being subjected to the action of a compression spring (22) provided between the said piston (20) and a cap (23) attached to the end face (12) of the said rim (11).

12. System according to one of Claims 10 and 11, characterised in that the face (20A) of each piston (20), intended to press the said corresponding radial member into the said annular groove (9), is bevelled.

13. System according to any one of the preceding Claims 1 to 12, characterised in that stop means are arranged on the said parts of revolution, enabling the relative rotation of the two parts to be limited.
